Europäisches Patentamt

**European Patent Office**

**Office européen des brevets**

(19)

(11) Veröffentlichungsnummer: **0 136 612**

**A2**

(12) # EUROPÄISCHE PATENTANMELDUNG

(21) Anmeldenummer: **84111037.2**

(22) Anmeldetag: **15.09.84**

(51) Int. Cl.⁴: **F 28 F 21/06**
**F 24 J 2/20, F 24 D 3/16**

(30) Priorität: **30.09.83 CH 5323/83**

(43) Veröffentlichungstag der Anmeldung:
**10.04.85 Patentblatt 85/15**

(84) Benannte Vertragsstaaten:
**AT BE DE FR GB IT NL SE**

(71) Anmelder: **Dürst, Felix**
**Am Wasser 121**
**CH-8049 Zürich(CH)**

(72) Erfinder: **Dürst, Felix**
**Am Wasser 121**
**CH-8049 Zürich(CH)**

(74) Vertreter: **Willi, Anton, J.**
**Alsenmattstrasse 2**
**CH-8800 Thalwil(CH)**

(54) Wärmeaustauscher aus Kunststoff.

(57) Die doppelwandige Wärmetauschplatte (1) ist durch Querstege (1b) in eine Vielzahl von Längskanälen (1c) unterteilt. An beiden Stirnenden der Platte (1) ist ein Verteil- bzw. Sammelelement (2) mit U-förmigem Querschnitt stumpf angeschweisst. Die Längskanäle (1c) der Wärmetauschplatte (1) stehen so an jedem Ende mit dem schlitzförmigen, der lichten Weite dieser Kanäle angepassten Verteil- bzw. Sammelkanal (2a) des einstückig mit einem Zu- bzw. Wegfuhrstutzen (2b) versehenen Verteil- bzw. Sammelelements in Verbindung. Der aus den Teilen 1, 2 bestehende Kunststoff-Wärmeaustauscher bildet eine vorfabrizierte Einheit, die sowohl als Wärmekollektor als auch als Absorber verwendbar ist. Mehrere solche Einheiten lassen sich z.B. zu Fussbodenheizungen oder zu Sonnenkollektoranlagen zusammenbauen.

EP 0 136 612 A2

./...

Fig. 1

Fig. 2

- 1 -

Felix Dürst                    CH-8049 Zürich

## Wärmeaustauscher aus Kunststoff

Gegenstand der Erfindung ist ein Wärmeaustauscher aus Kunststoff, der eine doppelwandige Wärmetauschplatte aufweist, in der durch zueinander parallele, die beiden im Abstand voneinander angeordneten Plattenwände verbindende Querstege eine Vielzahl von Längskanälen für den Durchfluss eines Wärmeträgermediums gebildet sind, mit deren offenen Enden an wenigstens einer Stirnseite der Wärmetauschplatte befestigte Verteil- und Sammelelemente in Verbindung stehen, die ihrerseits mit Zu- bzw. Ableitungsanschlüssen für das Wärmeträgermedium versehen sind.

Bekannte Wärmeaustauscher dieser Art, die je nach Material und Ausbildung z.B. als Sonnenkollektoren oder als Fussboden-Heizelemente verwendbar sind, besitzen der Kanalteilung der Wärmetauschplatte entsprechend gelochte Verteil- bzw. Sammelrohre, die im Bereich der Lochreihe mit Anschlussflanschen versehen sind, welche, die Plattenstirnseite übergreifend, an der Platte festgeschweisst sind. Abgesehen vom komplizierten Aufbau dieser Verteil- bzw. Sammelrohre hat sich gezeigt, dass das dichte und druckfeste Verbinden dieser Rohre mit der Platte recht schwierig ist. Dazu kommt, dass der Querschnitt dieser Rohre und damit die lichte Weite des Verteil- und Sammelkanals stets erheblich grösser sein muss als jene der nur wenige mm weiten Längskanäle der Wärmetauschplatte, was unerwünscht hohe Wärmeträgerdrücke in diesen Verteil- und Sammelkanälen bedingt. Es ist auch schon vorgeschlagen worden, die gelochten Verteil- und Sammelrohre einstückig und nur durch einen Quersteg unterteilt auszubilden und an einen Plattenstirnrand anzuschweissen, während am andern Plattenstirnrand ein Umlenkkanalstück angeschweisst ist. Diese Umkehrstrom-Wärmetauscher müssen mit ihrem an beiden Plattenlängsseiten offenen Verteil/Sammelrohr auf der jeweiligen Baustelle durch Anschweissen von Zwischenrohrstücken zu der üblicherweise aus vielen Einzel-Wärmeaustauscher gebildeten Kollektor- oder Absorbereinheit verbunden werden, was nicht nur umständlich ist, sondern meist auch keine Gewähr für eine dichte und druckfeste Verbindung bietet.

Alle diese Nachteile sind beim erfindungsgemässen Wärmeaustauscher vermieden. Er ist zu diesem Zweck dadurch gekennzeichnet, dass die Verteil- und Sammelelemente im Querschnitt U-förmige seitlich geschlossene Kunststoffelemente sind, deren lichte Weite etwa jener der Längskanäle der Wärmetauschplatte entspricht und deren einen durchgehenden Schlitzkanal begrenzende Schenkel stirnseitig stumpf an eine Stirnseite der Wärmetauschplatte angeschweisst sind, wobei die Zu- und Ableitungsanschlüsse durch mit diesen Kunststoffelementen einstückige Rohrstutzen gebildet sind.

Der erfindungsgemässe Aufbau des Wärmeaustauschers gestattet es, ihn als einstückiges Element in Vorfabrikation herzustellen und durch einfache Montagearbeiten (Verbinden entsprechender Stutzen mehrerer Elemente bzw. Anschliessen dieser Stutzen mittels Rohr- oder Schlauchstücken an Zu- und Ableitungsrohre etc.) zu Einheiten zusammenzufügen. Dies ist besonders dort vorteilhaft, wo auf einer Baustelle aus mehreren solchen Wärmeaustauschern z.B. grossflächige Sonnenkollektoreinheiten oder Fussbodenheizungen zusammengesetzt werden müssen. Es hat sich ausserdem gezeigt, dass das Stumpfanschweissen der freien Stirnseite der im Querschnitt U-förmigen Verteil- und Sammelelemente an der entsprechenden Stirnseite der Wärmetauschplatte nicht nur dank werkstattmässiger Vorfabrikation einfach durchzuführen ist, sondern auch zu einer tatsächlich dichten und druckfesten Verbindung führt. Ein wesentlicher Vorteil besteht auch darin, dass dank der/lichten der/ Weite der Längskanäle der Wärmetauschplatte angepassten Weite des Kanals der im Querschnitt U-förmigen Verteil- und Sammelelemente in den letzteren keine Druckspitzen auftreten können, die zu einer unerwünschten Scherbelastung der Schweissstellen zwischen diesen Elementen und der Wärmetauschplatte führen.

Die Erfindung ist im folgenden anhand der Zeichnungen beispielsweise näher erläutert. In dieser Zeichnung zeigen:

Fig. 1    in Draufsicht eine Endpartie eines Wärmeaustauschers nach der Erfindung,

Fig. 2    in Stirnansicht das Verteil- bzw. Sammelelement des Beispiels nach fig. 1,

Fig. 3    einen Querschnitt nach der Linie III - III in Fig. 1 mit angesetztem Verbindungsschlauch,

Fig. 4     einen Querschnitt durch das Verteil- bzw.
           Sammelelement nach Fig. 2,

Fig. 5     Teilansichten analog Fig.1 und 2 einer er-
und 6      sten Variante des Verteil- bzw. Sammelelementes,

Fig. 7     Teilansichten analog Fig. 5 und 6 einer zwei-
und 8      ten Variante des Verteil- bzw. Sammelelementes,

Fig. 9     in grösserem Massstab und in Stirnansicht einen Teil einer Wärmetauschplatte,

Fig. 10    schematisch eine Draufsicht auf eine aus mehreren parallel geschalteten Wärmeaustauschern
           nach Fig. 1 gebildeten Einheit, und

Fig. 11    eine Variante zu Fig. 10.


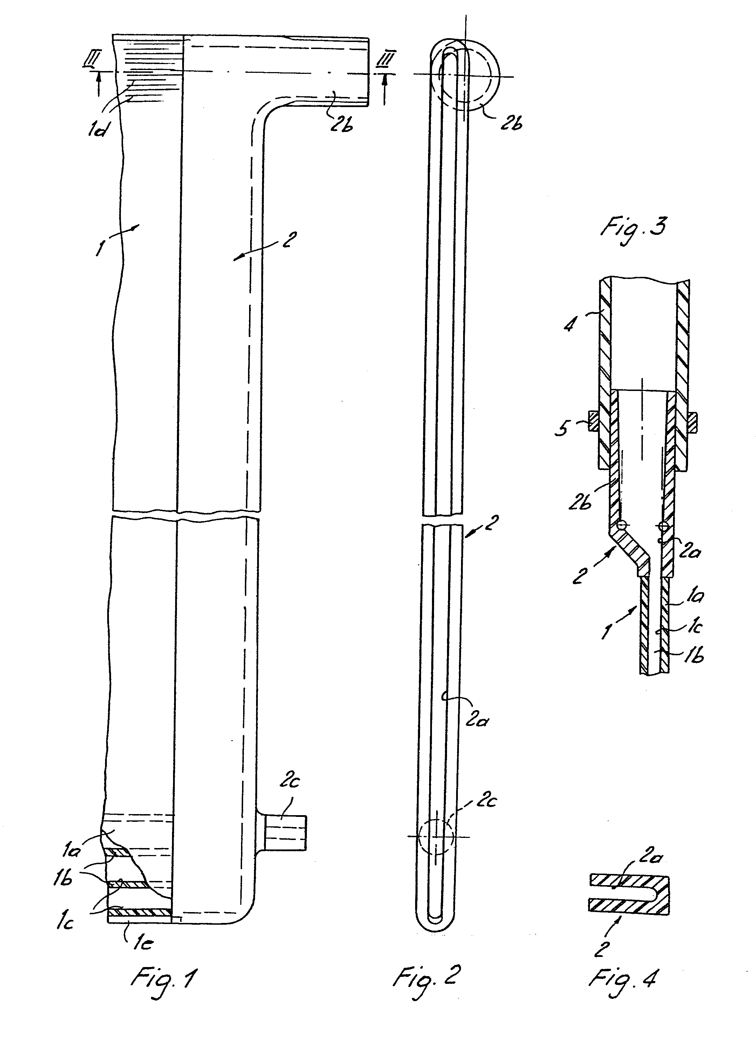

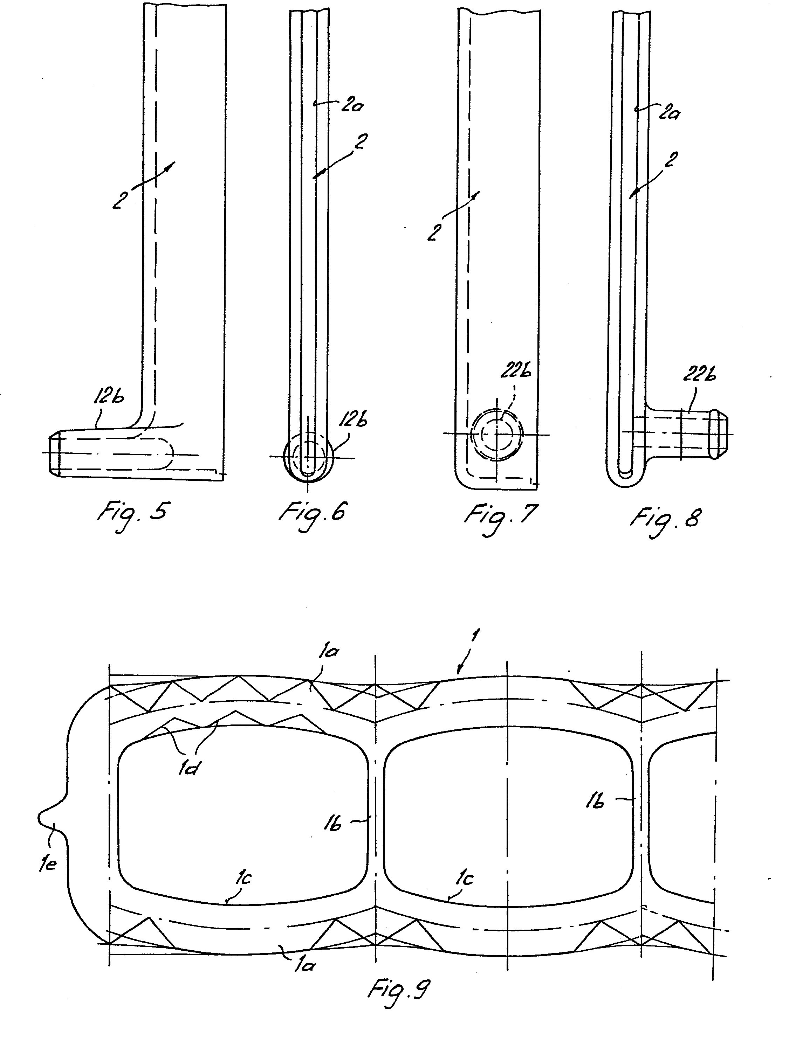

Der Wärmeaustauscher nach den Fig. 1 bis 4 besitzt
eine Wärmetauschplatte 1, die durch zwei zueinander
parallele Wände 1a und diese verbindende, eine Vielzahl
von Längskanälen 1c schaffende Querstege 1b gebildet
ist. An jeder der beiden Plattenstirnseiten sind die
Schenkel eines im Querschnitt U-förmigen Verteil- bzw.
Sammelelementes 2 stumpf angeschweisst. Der durch einen
durchgehenden, seitlich abgeschlossenen Längsschlitz
2a gebildete Verteil- bzw. Sammelkanal dieser Elemente
2 entspricht der  lichten Weite der in ihn mündenden
Längskanäle 1c der Wärmetauschplatte 1. Wie in Fig.3
ersichtlich, sind die Wände 1a der Wärmetauschplatte 1
etwas dünner als die Schenkel der Elemente 2, sodass
eine einwandfreie Stumpfschweissung bei genügender Festigkeit der Verteil- und Sammelelemente 2 möglich ist.
Am einen Ende jedes der beiden Elemente 2 (und zwar
seitenverkehrt) ist ein Zu- bzw. Ableitungsstutzen 2b
einstückig angeformt. Beim gezeichneten Beispiel verläuft die Stutzenachse parallel zu den Längskanälen 1c
der Wärmetauschplatte 1 und ragt an der einen Flachseite des Verteil- bzw. Sammelelementes 2 über den Querschnitt des letzteren hinaus, während er an der andern Flachseite und an der Schmalseite dieses Elementes mit diesem bündig ist. Dabei ist zu beachten, dass die Stutzen 2b der an den beiden Stirnenden der Wärmetauschplatte 1 stumpf angeschweissten Verteil- bzw. Sammelelemente 2 über die gleiche Flachseite dieser Platte überstehen. Im Bereich des andern Endes der beiden Elemente 2 ist ein etwa der Dicke dieser Elemente entsprechender, zum Stutzen 2b achsparalleler Zapfen 2c vorgesehen.

Aus derart ausgebildeten, vollständig aus Kunststoff bestehenden Wärmeaustauschern lässt sich z.B. eine Fussbodenheizung erstellen, wie dies beispielsweise in Fig. 10 bzw. 11 schematisch dargestellt ist. Die Wärmeaustauscher 1, 2 sind dabei in der gewünschten Anzahl nebeneinander gelegt und in dieser eine ebene Bodenfläche bildenden Lage fest miteinander verbunden. Zu diesem Zweck sind zwei passende Oeffnungen aufweisende Laschen 3 vorgesehen, die einerseits über den Stutzen 2b des einen Wärmeaustauschers 1, 2 und anderseits über den Zapfen 2c des benachbarten Wärmeaustauschers 1, 2 gesteckt sind. Damit ist ein einwandfreier Verbund der Wärmeaustauscher gewährleistet. Analog Fig. 3 ist auf die Stutzen 2b das eine Ende von Anschlussrohrstük- ken 4 aus Kunststoff gesteckt und z.B. mittels Briden 5 daran fixiert. Diese Anschlussrohrstücke 4 sind an ihrem andern Ende konisch verjüngt und in entsprechende Löcher einer Zu- bzw. Wegführleitung 6 aus Kunststoff passend an der letzteren festgeschweisst. Die Montage einer solchen Fussbodenheizung ist besonders einfach, da alle Schweissarbeiten (Verbindung der Rohrstücke 4 mit den Leitungen 6 bzw. Verbindung der Elemente 2 mit den Platten 1) werkstattseitig durchgeführt werden können, und auf der Baustelle nur das Verlegen und Verbinden dieser vorfabrizierten Teile erforderlich ist. Wie Fig. 11 zeigt, lässt sich unter Verwendung längerer Laschen 3a und entsprechend grösserer Teilung der an den Leitungen 6 angebrachten Rohrstücke 4 auch eine Anlage mit grösseren und/oder unterschiedlichen gegenseitigen Abständen der einzelnen Wärmeaustauscher erstellen.

Der Vollständigkeit halber sei erwähnt, dass nicht nur, wie in den gezeichneten Ausführungen, parallel durchströmte Wärmeaustauscher vorgesehen sein können, bei welchen also das Element 2 am einen Stirnende der Wärmetauschplatte 1 an die Zuleitung und das andere Element 2 am andern Stirnende der Platte 1·an eine Wegführleitung angeschlossen ist, sondern dass auch Ausführungen mit Umkehrströmung möglich sind; in diesem Fall sind die Längskanäle der Wärmetauschplatte durch Anordnung eines mittleren Trennsteges im Verteil- bzw. Sammelelement auf der einen Stirnseite der Platte voneinander getrennt, während sie über das Element 2 am andern Stirnende miteinander in Verbindung stehen. Es versteht sich, dass in diesem Fall das am durch den Trennsteg in einen Verteil- und einen Sammelkanal unterteilte Element beiderends mit einem Anschlussstutzen versehen sein muss, während das Umlenkelement am andern Plattenstirnende keines Stutzens bedarf.

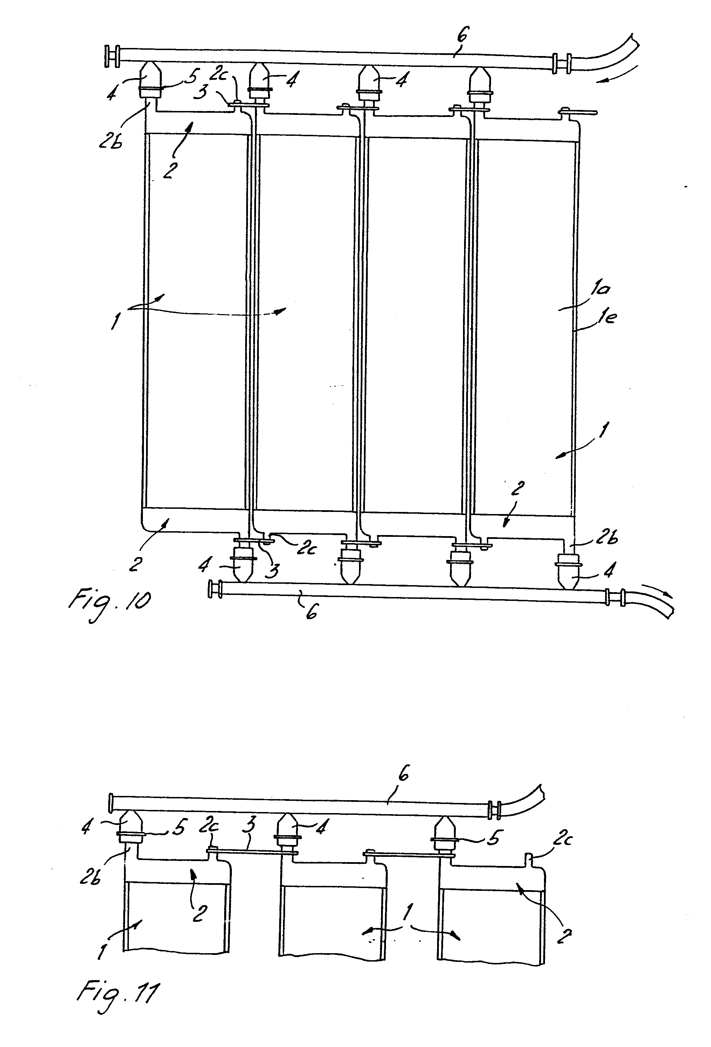

Art und Lage der Anschlussstutzen an den Verteil-und Sammelelementen können je nach Verwendungszweck bzw. Montageart des Wärmeaustauschers verschieden sein; zwei entsprechende Varianten sind in den Fig. 5 bis 8 dargestellt. So liegt die Achse des Stutzens 12b gemäss den Fig. 5 und 6 in der Mittelebene des Elementes 2, während bei der Variante nach Fig. 7 und 8 der Stutzen 22b rechtwinklig zur Mittelebene des Elementes 2 von der einen Flachseite des letzteren wegragt. Damit lassen sich in einfacher Weise solche Wärmeaustauscher auch übereinanderliegend bzw. nebeneinanderstehend miteinander verbinden.

Um den Wärmeaustausch optimal zu halten, ist es zweckmässig, die Wände 1a der Wärmetauschplatte mit längslaufenden Rippen 1d bzw. Rillen (Fig. 1 und 9) zu versehen. Aussenrippen sind besonders dann von Vorteil, wenn der Wärmeaustauscher als Sonnenkollektor verwendet wird, da damit nicht nur die wärmeaufnehmende Fläche vergrössert wird, sondern auch ein günstigerer Auftreffwinkel der Sonnenstrahlen erzielt werden kann. Aber auch Innenrippen führen in jedem Fall zu einer Vergrösserung der am Wärmeübergang beteiligten Wandfläche. Wie Fig. 9 zeigt, sind die die einzelnen Längskanäle begrenzenden Partien der beiden Plattenwände 1a zweckmässig leicht nach aussen gewölbt, und deren Uebergänge in die relativ dünnen Querstege 1b sind gerundet. Damit erhält man trotz geringer Wandstärke ein relativ steifes Plattengebilde.

An den Längsschmalseiten der Wärmetauschplatte 1 ist je eine schmale Längsrippe 1e vorgesehen. Beim Nebeneinandermontieren mehrerer Wärmetauscher, z.B. gemäss Fig. 10, schliessen diese Längsrippen 1e den Spalt zwischen benachbarten Wärmetauschplatten und können auch als gegenseitige Auflage dienen.

- 1 -

P A T E N T A N S P R U E C H E

1. Wärmeaustauscher aus Kunststoff, der eine doppelwandige Wärmetauschplatte (1) aufweist, in der durch zueinander parallele, die beiden im Abstand voneinander angeordneten Plattenwände verbindende Querstege eine Vielzahl von Längskanälen (1c) für den Durchfluss eines Wärmeträgermediums gebildet sind, mit deren offenen Enden an wenigstens einer Stirnseite der Wärmetauschplatte befestigte Verteil- und Sammelelemente (2) in Verbindung stehen, die ihrerseits mit Zu- bzw. Ableitungsanschlüssen (2b) für das Wärmeträgermedium versehen sind, dadurch gekennzeichnet, dass die Verteil- und Sammelelemente im Querschnitt U-förmige seitlich geschlossene Kunststoffelemente (2) sind, deren lichte Weite etwa jener der Längskanäle (1c) der Wärmetauschplatte (1) entspricht und deren einen durchgehenden Schlitzkanal (2a) begrenzende Schenkel stirnseitig stumpf an eine Stirnseite der Wärmetauschplatte (1) angeschweisst sind, wobei die Zu- und Ableitungsanschlüsse durch mit diesen Kunststoffelementen (2) einstückige Rohrstutzen (2) gebildet sind.

2. Wärmetauscher nach Anspruch 1, dadurch gekennzeichnet, dass die Wandstärke der im Querschnitt U-förmigen Verteil- und Sammelelemente (2) etwas grösser ist als jene der Wärmetauschplatte (1).

3. Wärmeaustauscher nach Anspruch 2, dadurch gekennzeichnet, dass wenigstens die Aussenfläche, zweckmässig aber auch die Innenfläche der beiden Wärmetauschplattenwände (1a), mit Längsrippen (1d) versehen ist, wobei die einzelnen Längskanäle (1c) begrenzenden Wandpartien nach aussen gewölbt sind.

4. Wärmeaustauscher nach einem der Ansprüche 1 bis 3, dadurch gekennzeichnet, dass die Anschlussstutzen (2b) am einen Ende der im Querschnitt U-förmigen Verteil- und Sammelelemente (2) mit zur Plattenebene paralleler Achse vom Rücken dieser Elemente wegragen.

5. Wärmeaustauscher nach Anspruch 4, dadurch gekennzeichnet, dass der Durchmesser des Durchlasses des Anschlussstutzens (2b) grösser ist als die lichte Weite des Schlitzkanals (2a) der Elemente, wobei der Stutzen sowohl am Elementende als auch an einer Flachseite des Elementes mit diesem bündig ist.

6. Wärmeaustauscher nach Anspruch 4 oder 5, dadurch gekennzeichnet, dass im Bereich des vom Anschlussstutzen (2b) abgekehrten Endes der Verteil- und Sammelelemente (2) ein zum Stutzen achsparalleler Zapfen (2c) vorgesehen ist, wobei zum Zweck der Verbindung benachbarter Wärmetauscher der Zapfen (2c) des Verteil- bzw. Sammelelements (2) des einen Wärmetauschers mit dem Anschlussstutzen (2b) des Verteil- bzw. Sammelelementes (2) des benachbarten Wärmetauschers durch eine Verbindungslasche (3) verbindbar ist.

7. Wärmeaustauscher nach einem der Ansprüche 1 bis 6, dadurch gekennzeichnet, dass an den Längsschmalseiten der Wärmetauschplatte (1) je eine Längsrippe (1e) vorgesehen ist.

0136612

Fig.1

Fig.2

Fig.3

Fig.4

0136612

Fig. 5   Fig. 6   Fig. 7   Fig. 8

Fig. 9

Fig. 10

Fig. 11